# FASCICULE DE BREVET EUROPEEN

(11) **EP 2 681 482 B1**
(45) Date de publication et mention de la délivrance du brevet: **17.12.2014**
(21) Numéro de dépôt: 12708917.5
(22) Date de dépôt: 14.02.2012
(51) Int. Cl.: F17C 3/02

(54) **FIXATION DE PANNEAUX ISOLANTS SUR UNE PAROI PORTEUSE SELON UN MOTIF REPETE**
BEFESTIGUNG VON DÄMMSTOFFPLATTEN AN EINER TRAGENDEN WAND IN EINEM WIEDERHOLUNGSMUSTER
ATTACHMENT OF INSULATING PANELS ONTO A SUPPORTING WALL IN A REPEATING PATTERN

(30) Priorité: 01.03.2011 FR 1151651
(43) Date de publication de la demande: 08.01.2014
(73) Titulaire: GAZTRANSPORT ET TECHNIGAZ S.A., 78470 St. Rémy Lès Chevreuse (FR)
(72) Inventeur: GAZEAU, James, F-92160 Antony (FR)
(74) Mandataire: Loyer & Abello
(86) Numéro de dépôt international: PCT/FR2012/050314
(87) Numéro de publication internationale: WO 2012/117180

(56) Documents cités:
- EP-A1- 0 543 686
- FR-A1- 2 174 703
- FR-A1- 2 691 520
- FR-A1- 2 909 356

## Description

L'invention se rapporte au domaine de la fabrication de parois thermiquement isolantes à partir de panneaux isolants fixés sur une paroi porteuse selon un motif répété, ainsi qu'à des constructions employant de telles parois thermiquement isolantes, notamment des cuves étanches et thermiquement isolées destinées à contenir du gaz naturel liquéfié ou d'autres produits chauds ou froids.

Des parois isolantes obtenues à partir de panneaux isolants préfabriqués juxtaposés selon un motif répété sont connues dans des cuves de navire méthanier. Ainsi, FR2691520A1 divulgue un système d'isolation thermique dans lequel des plaques isolantes rectangulaires et des structures d'angle préfabriquées sont fixées à une structure porteuse par l'intermédiaire de vis engagées dans des trous formés tout autour de la plaque isolante ou de la structure d'angle. Ce système nécessite un nombre relativement élevé de vis par plaque isolante.

FR2909356 divulgue une cuve étanche et thermiquement isolée dans laquelle des blocs isolants sont fixés sur la coque interne d'un navire par des cordons de mastic disposés sur la face inférieure de leur panneau porteur et maintenus en contact avec la coque interne lors de leur installation par l'intermédiaire de moyens de fixation coopérant avec des goujons fixés sur la coque selon un motif répété. Ce système nécessite un nombre relativement élevé de goujons par bloc isolant, pour assurer une pression relativement uniforme du mastic contre la coque interne.

Selon un mode de réalisation, l'invention fournit un procédé pour fixer un panneau isolant sur une paroi porteuse au sein d'un motif répété de panneaux isolants, la paroi porteuse étant munie d'organes d'ancrage disposés selon ledit motif répété, un panneau isolant comportant à chaque fois un adhésif disposé sur une surface inférieure du panneau isolant et au moins un perçage traversant le panneau isolant, le procédé comportant : disposer un premier panneau isolant sur la paroi porteuse de manière à appliquer l'adhésif contre la paroi porteuse, le perçage du premier panneau isolant étant positionné au droit d'au moins un premier organe d'ancrage,
serrer le premier panneau isolant contre la paroi porteuse à l'aide du premier organe d'ancrage au niveau du perçage,
attacher au moins un outil de serrage à au moins un deuxième organe d'ancrage correspondant à l'emplacement d'un deuxième panneau isolant voisin du premier panneau isolant, l'outil de serrage comportant une tige d'ancrage apte à être attachée aux organes d'ancrage de la paroi porteuse de manière à faire saillie sensiblement perpendiculairement à la paroi porteuse et un bras lié à la tige d'ancrage transversalement à celle-ci pour s'étendre à distance de la paroi porteuse dans la position attachée de l'outil de serrage, et
serrer le premier panneau isolant contre la paroi porteuse avec le bras de l'outil de serrage au niveau d'une zone du premier panneau isolant distante du perçage du premier panneau isolant.

Selon des modes de réalisation particuliers, un tel procédé peut comporter une ou plusieurs des caractéristiques suivantes.

Selon un mode de réalisation, le deuxième panneau isolant n'est pas encore disposé sur la paroi porteuse lors de la fixation du premier panneau isolant, le bras de l'outil de serrage étant mis en appui d'une part sur le premier panneau isolant et d'autre part sur la paroi porteuse au niveau de l'emplacement du deuxième panneau isolant.

Selon un mode de réalisation, le procédé comporte en outre :
retirer l'outil de serrage du deuxième organe d'ancrage après que l'adhésif du premier panneau isolant a été écrasé contre la paroi porteuse, pour permettre la mise en place du deuxième panneau isolant sur la paroi porteuse. Optionnellement, l'outil de serrage peut être maintenu plus longtemps en position, par exemple pendant tout ou partie du temps de séchage de l'adhésif, avant d'être retiré du deuxième organe d'ancrage.

Selon un mode de réalisation, un troisième panneau isolant voisin du premier panneau isolant est déjà disposé sur la paroi porteuse lors de la fixation du premier panneau isolant, le procédé comportant en outre : attacher un deuxième outil de serrage à un troisième organe d'ancrage correspondant à l'emplacement du troisième panneau isolant,
mettre en appui le bras du deuxième outil de serrage d'une part sur le premier panneau isolant et d'autre part sur le troisième panneau isolant, et
serrer le premier panneau isolant contre la paroi porteuse avec le bras du deuxième outil de serrage au niveau d'une deuxième zone du premier panneau isolant distante du perçage du premier panneau isolant.

Selon un mode de réalisation, une surface du premier panneau isolant et une surface du troisième panneau isolant sur lesquelles le bras du deuxième outil de serrage prend appui sont à un même niveau par rapport à la paroi porteuse.

Selon un autre mode de réalisation, une surface du premier panneau isolant et une surface du troisième panneau isolant sur lesquelles le bras du deuxième outil de serrage prend appui sont à des niveaux différents par rapport à la paroi porteuse. Un tel mode de réalisation peut notamment être utilisé avec des panneaux présentant des épaisseurs différentes, ou lorsqu'un même panneau isolant présente des épaisseurs différentes sur différentes zones du panneau isolant.

Selon un mode de réalisation, les organes d'ancrage comportent des goujons faisant saillie sur la paroi porteuse, le procédé comportant en outre :
visser un écrou sur un goujon engagé dans le perçage du panneau isolant pour réaliser le serrage du premier panneau isolant contre la paroi porteuse au niveau du perçage.

Selon un mode de réalisation, un panneau isolant comporte à chaque fois une plaque de base en matière rigide et un bloc de matière isolante fixé sur la plaque de base, le perçage du panneau isolant formant un puits à travers le bloc de matière isolante.

Selon la taille des panneaux isolants à fixer et l'intensité des efforts de serrage souhaités, un tel procédé peut aussi être mis en oeuvre avec plusieurs perçages par panneau isolant coopérant avec plusieurs organes d'ancrage correspondants.

Selon la taille des panneaux isolants à fixer et l'intensité des efforts de serrage souhaités, un tel procédé peut aussi être mis en oeuvre en employant un plus grand nombre d'outils de serrage par panneau isolant, par exemple en employant simultanément plusieurs outils de serrage comme le premier outil de serrage précité et/ou en employant simultanément plusieurs outils de serrage comme le deuxième outil de serrage précité. Chaque outil de serrage est le cas échéant employé pour serrer une zone différente du premier panneau isolant contre la paroi porteuse de manière à assurer un bon contact et une bonne prise de l'adhésif contre la paroi porteuse.

Lorsque plusieurs outils de serrage sont employés, un tel procédé peut être mis en oeuvre à l'aide de plusieurs types d'outils de serrage présentant différentes dimensions et étant chacun adapté aux dimensions et aux épaisseurs des zones où l'outil de serrage doit s'appuyer. Toutefois, une telle mise en oeuvre nécessite de fournir, de stocker et de trier plusieurs types d'outils de serrage, ce qui peut compliquer la gestion d'un chantier de construction.

Alternativement, un tel procédé peut être mis en oeuvre à l'aide d'un type d'outil de serrage plus universel, présentant des parties réglables adaptables aux différentes dimensions et aux différentes épaisseurs des zones où l'outil de serrage doit s'appuyer. Une combinaison d'outils de serrage prédimensionnés et d'outils de serrage réglables est aussi possible selon les exigences de l'application visée.

Selon un mode de réalisation correspondant, l'invention fournit aussi un outil de serrage convenant pour la mise en oeuvre des procédés précités, comportant :
une tige d'ancrage apte à être attachée aux organes d'ancrage de la paroi porteuse de manière à faire saillie sensiblement perpendiculairement à la paroi porteuse, un bras lié à la tige d'ancrage transversalement à celle-ci pour s'étendre à distance de la paroi porteuse dans la position attachée de l'outil de serrage, le bras comportant une première et une deuxième parties situées de part et d'autre de la tige d'ancrage,
un premier organe d'appui lié de manière mobile à la première partie du bras et réglable en position par rapport au bras selon une direction sensiblement parallèle à la tige d'ancrage pour pouvoir être mis en appui sur un panneau isolant, et
un deuxième organe d'appui lié de manière mobile à la deuxième partie du bras et réglable en position par rapport au bras selon une direction sensiblement parallèle à la tige d'ancrage,
dans lequel le deuxième organe d'appui présente une amplitude de réglage en position par rapport au bras qui est supérieure à l'épaisseur des panneaux isolants pour pouvoir mettre en appui le deuxième organe d'appui sélectivement sur la paroi porteuse ou sur un autre panneau isolant lorsque le premier organe d'appui est en appui sur le premier panneau isolant.

Selon des modes de réalisation particuliers, un tel outil de serrage peut comporter une ou plusieurs des caractéristiques suivantes.

Selon un mode de réalisation, le premier organe d'appui comporte un premier patin lié à l'extrémité d'une première vis de réglage, la première vis de réglage étant engagé dans un trou fileté disposé dans la première partie du bras. Ces dispositions permettent un réglage de position continu du premier patin pour exercer une pression contrôlée sur le panneau isolant.

Selon un mode de réalisation, le deuxième organe d'appui comporte un deuxième patin lié à l'extrémité d'une deuxième vis de réglage, la deuxième vis de réglage étant engagé dans un trou fileté disposé dans une tige intermédiaire, la tige intermédiaire étant liée à la deuxième partie du bras de manière à s'étendre parallèlement à la tige d'ancrage et étant réglable en position par rapport à la deuxième partie du bras. Une telle tige intermédiaire réglable permet d'obtenir une amplitude de réglage relativement importante du deuxième patin sans allonger excessivement la deuxième vis de réglage, ce qui limite les risques qu'une telle vis ne se fausse, se torde ou se grippe à l'usage.

Selon un mode de réalisation, la tige intermédiaire présente plusieurs positions de réglage prédéterminées par rapport à la deuxième partie du bras. Ces dispositions permettent de créer un outil de serrage adapté à un nombre limité de dimensions prédéterminées, par exemple des dimensions de panneaux standardisées, tout en prévoyant un mode de réglage relativement rapide de la tige intermédiaire entre les différentes positions correspondantes.

Selon un mode de réalisation, la tige intermédiaire présente plusieurs perçages définissant les positions de réglage prédéterminées par rapport à la deuxième partie du bras. Un tel mode de réalisation est adapté à réaliser la fixation tige intermédiaire sur le bras par vis, par goupille ou analogue.

Selon un mode de réalisation, le bras est réglable en position le long de la tige d'ancrage. Un tel réglage en position peut être continu ou entre un nombre limité de position discrètes prédéterminées.

Selon un mode de réalisation, l'outil comporte une vis de blocage pour sélectivement interdire ou libérer un coulissement du bras le long de la tige d'ancrage. En variante, cette fonction peut être exercée par d'autres dispositifs de blocage, par exemple une solution de type serre-joint qui se bloque sous l'effet d'un arc-boutement.

Selon un mode de réalisation, le bras et la tige d'ancrage sont articulés l'un à l'autre par une liaison rotule.

Selon un mode de réalisation, l'invention fournit aussi une cuve étanche et isolante comportant :
une paroi porteuse munie d'organes d'ancrage disposés selon un motif répété,
une barrière d'étanchéité destinée à être en contact avec un produit contenu dans la cuve, et
une barrière d'isolation thermique disposé entre la barrière d'étanchéité et la paroi porteuse, la barrière d'isolation thermique comportant une pluralité de panneaux isolants disposés selon le motif répété, un panneau isolant étant à chaque fois fixé à la paroi porteuse par un adhésif disposé sur une surface inférieure du panneau isolant et un ou plusieurs organes d'ancrage de la paroi porteuse coopérant à chaque fois avec un perçage traversant le panneau isolant,
dans laquelle un nombre d'organes d'ancrage par panneau isolant est compris entre 1 inclus et 6 inclus, de préférence entre 2 inclus et 3 inclus.

Une telle cuve peut notamment être fabriquée en utilisant un procédé de fixation des panneaux isolants défini plus haut.

Selon des modes de réalisation particuliers, une telle cuve peut comporter une ou plusieurs des caractéristiques suivantes.

Selon un mode de réalisation, les perçages sont disposés le long des bords des panneaux isolants.

Selon un mode de réalisation, un panneau isolant comporte une plaque de base en matière rigide et un bloc de matière isolante fixé sur la plaque de base à l'opposé de la surface inférieure portant l'adhésif, un perçage du panneau isolant comportant à chaque fois un puits ménagé à travers le bloc de matière isolante et un alésage de plus petit diamètre que le puits ménagé à travers la plaque de base au fond du puits pour recevoir l'organe d'ancrage destiné à fixer le panneau isolant contre la paroi porteuse.

Une telle cuve peut faire partie d'une installation de stockage terrestre, par exemple pour stocker du GNL ou être installée dans une structure flottante, côtière ou en eau profonde, notamment un navire méthanier, une unité flottante de stockage et de regazéification (FSRU), une unité flottante de production et de stockage déporté (FPSO) et autres.

Selon un mode de réalisation, un navire pour le transport d'un produit liquide froid comporte une double coque et une cuve précitée disposée dans la double coque. De préférence, la paroi porteuse est fournie par une coque interne de la double coque.

Selon un mode de réalisation, l'invention fournit aussi un procédé de chargement ou déchargement d'un tel navire, dans lequel on achemine un produit liquide froid à travers des canalisations isolées depuis ou vers une installation de stockage flottante ou terrestre vers ou depuis la cuve du navire.

Selon un mode de réalisation, l'invention fournit aussi un système de transfert pour un produit liquide froid, le système comportant le navire précité, des canalisations isolées agencées de manière à relier la cuve installée dans la coque du navire à une installation de stockage flottante ou terrestre et une pompe pour entrainer un flux de produit liquide froid à travers les canalisations isolées depuis ou vers l'installation de stockage flottante ou terrestre vers ou depuis la cuve du navire.

Une idée à la base de l'invention est de réaliser un collage fiable de panneaux isolants sur une paroi porteuse à l'aide d'un nombre limité de points d'ancrage disponibles pour réaliser un serrage des panneaux isolants contre la paroi porteuse.

Certains aspects de l'invention partent de l'idée que, dans une structure de panneaux isolants disposés selon un motif répété, dans laquelle des organes d'ancrage sont également disposés selon un motif répété, le serrage d'un panneau isolant contre la paroi porteuse peut être réalisé non seulement à partir du ou des organes d'ancrage situés sur l'emplacement du panneau, mais également à partir du ou des organes d'ancrage situés en dehors de l'emplacement du panneau, notamment situés sur l'emplacement de panneaux isolants voisins au sein du motif répété.

Certains aspects de l'invention partent de l'idée que, pour réaliser un collage fiable de panneaux isolants sur une paroi porteuse, des moyens de serrage d'un panneau isolant contre la paroi porteuse ne doivent pas nécessairement rester définitivement sur le panneau isolant. Certains aspects de l'invention partent de l'idée que ces moyens de serrage peuvent interférer avec l'emplacement d'autres panneaux isolants restant à monter, dès lors que ces moyens de serrage sont employés temporairement pour la durée de l'écrasement de l'adhésif du premier panneau -- et éventuellement tout ou partie de son séchage -- et peuvent ensuite être retirés pour libérer l'emplacement des autres panneaux.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.

Sur ces dessins :
- La figure 1 est une vue schématique en perspective d'un outil de serrage selon un mode de réalisation apte à être attaché à une paroi porteuse.
- La figure 2 est une vue schématique en perspective d'une zone de paroi isolante sur laquelle des outils de serrage de la figure 1 sont montés dans différentes configurations.
- Les figures 3 à 6 sont des représentations schématiques en vue de dessus d'une paroi isolante montrant des étapes successives d'un procédé de fabrication de la paroi isolante à l'aide d'outils de serrage.
- La figure 7 est une représentation schématique en vue de dessus d'une paroi isolante selon un autre mode de réalisation.
- La figure 8 est une représentation schématique écorchée d'une cuve de navire méthanier comportant une paroi isolante et d'un terminal de chargement/déchargement de cette cuve.

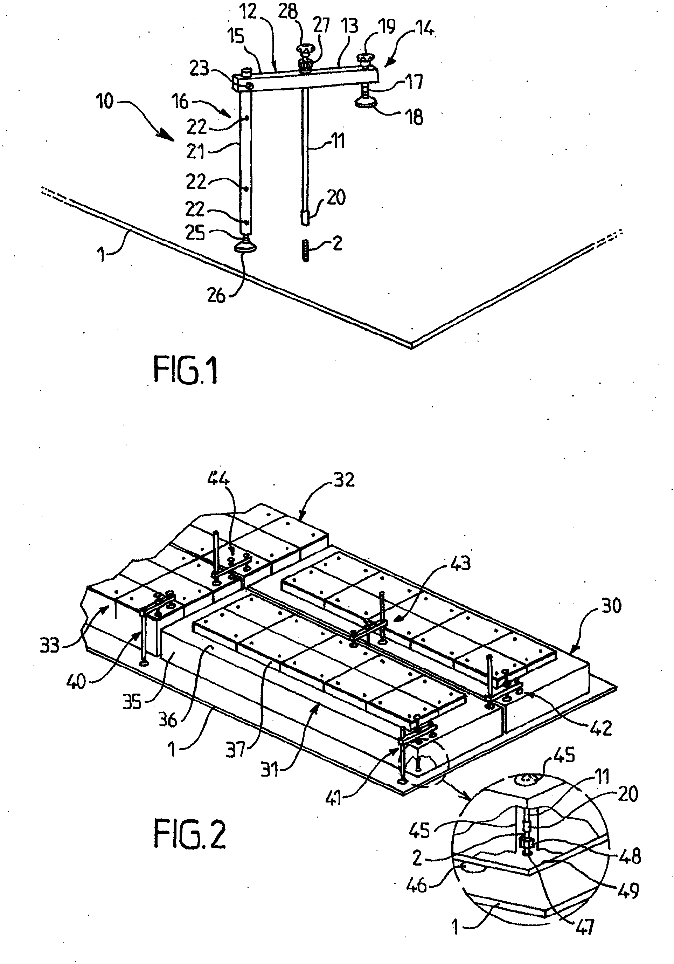

En référence à la figure 1, un outil de serrage réglable 10 est représenté au-dessus d'une paroi 1 sur laquelle l'outil 10 est destiné à être attaché pour pouvoir serrer divers objets contre la paroi 1.

L'outil de serrage 10 comporte une tige d'ancrage 11 dont une extrémité porte une attache20 et un bras transversal 12 lié à la tige d'ancrage 11 en un point intermédiaire du bras 12 de manière à s'étendre de part et d'autre de la tige d'ancrage 11. Une première partie 13 du bras 12 porte un premier dispositif d'appui réglable 14 et une deuxième partie 15 du bras 12 porte un deuxième dispositif d'appui réglable 16.

Le premier dispositif d'appui réglable 14 comporte une vis de réglage 17 engagée dans un trou fileté du bras 12 parallèlement à la tige d'ancrage 11. La vis 17 comporte un patin d'appui 18 à son extrémité tournée du côté de l'attache 20 et une poignée 19 à l'extrémité opposée. La poignée 19 sert à visser manuellement la vis 17 pour régler la position du patin d'appui 18 par rapport au bras 12. Le patin d'appui 19 peut avoir la forme d'un disque ou autre.

Le deuxième dispositif d'appui réglable 16 comporte une tige intermédiaire 21 engagée de manière coulissante dans un trou du bras 12 parallèlement à la tige d'ancrage 11. La tige 21 présente plusieurs trous transverses 22 situés le long de sa longueur et permettant de fixer la tige intermédiaire 21 au bras 12 dans différentes positions. Pour cela, on coulisse la tige intermédiaire 21 jusqu'à placer un trou 22 correspondant à la position souhaitée au niveau du bras 12, puis on engage et on serre une vis de fixation 23 dans le bras 12 et dans le trou 22 correspondant. Il y a quatre trous 22 dans le mode de réalisation de la figure 1, le premier étant masqué par le bras 12.

Une vis de réglage 25 est engagée dans un trou fileté à l'extrémité de la tige intermédiaire 21 parallèlement à la tige d'ancrage 11. La vis 25 porte un patin d'appui 26 à son extrémité tournée du côté de l'attache 20. Le patin d'appui 26 peut avoir la forme d'un disque ou autre.

La tige 11 est engagée de manière coulissante à travers une rotule située dans la partie centrale du bras 12. La rotule peut être formée par un trou de forme évasée traversant le bras 12 et/ou par des pièces intermédiaires logées dans le bras 12, selon la technique connue.

Un dispositif de serrage comportant une bague rotative 27 permet de sélectivement libérer ou bloquer le coulissement longitudinal de la tige d'ancrage 11 par rapport au bras 12. La tige d'ancrage 11 porte une poignée 28 à son extrémité opposée à l'attache20 pour faciliter la manipulation de la tige 11 en rotation et ou en translation.

L'attache 20 présente une forme complémentaire d'un organe d'ancrage 2 fixé à la paroi 1 où l'outil de serrage 10 est destiné à être utilisé. Dans l'exemple représenté, l'organe d'ancrage 2 est un goujon fileté et l'attache 20 est une douille filetée correspondante. Ce système d'attache à deux parties complémentaires peut être permuté ou réalisé d'une autre manière.

Le principe d'utilisation de l'outil de serrage 10 est d'attacher la douille 20 à un goujon 2 de la paroi 1, de mettre le patin 18 en appui sur la surface supérieure d'un objet que l'on souhaite serrer contre la paroi 1, par exemple pour le coller, et de mettre le patin 26 en appui sur la surface de la paroi 1 ou sur la surface supérieure d'un autre objet que l'on souhaite serrer contre la paroi 1, et d'exercer un serrage des patins 18 et 26 contre les surfaces sur lesquelles ils sont appuyés, de manière à mettre en tension la tige d'ancrage 11 entre le goujon 2 et le bras transverse 12. L'outil de serrage 10 permet ainsi, à partir d'un organe d'ancrage 2 fixé à la paroi 1, d'exercer une pression sur un ou plusieurs objets en direction de la paroi 1, dans toute une zone de voisinage circulaire s'étendant autour de l'organe d'ancrage 2 et dont la taille dépend de la longueur du bras 12. Le cas échéant, le patin 18 est destiné à être en appui sur le plus épais des deux objets à serrer contre la paroi 1.

En référence à la figure 2, on a représenté plusieurs exemplaires de l'outil de serrage utilisés dans différentes configurations pour serrer des panneaux isolants 30 à 33 sur la paroi 1.

Les panneaux isolants 30 et 31 sont similaires à des structures préfabriquées décrites dans le document FR2691520A1, qui comportent un élément de barrière d'isolation secondaire 35 recouvert d'un élément de barrière d'étanchéité secondaire 36 recouvert d'un élément de barrière d'isolation primaire 37 de plus petite section que les deux premiers éléments. Les panneaux isolants 32 et 33 sont des structures plus simples présentant une épaisseur uniforme sur toute leur section.

Le mode de fixation des panneaux 30 à 33 sur la paroi 1 est représenté par le détail écorché agrandi du panneau 31. En différents points du panneau, ici à proximité d'un coin, des perçages sont prévus, qui comportent à chaque fois un perçage 47 réalisé dans la plaque de base 49 en contreplaqué du panneau 31 et une cheminée 45 réalisée dans le bloc de mousse isolante au droit du perçage 47. Un goujon 2 est engagé à travers le perçage 47 et dépasse dans la base de la cheminée 45 où il est coiffé d'un écrou 48 assurant une fixation sûre de la plaque de base 49 par rapport au goujon 2. Le goujon 2 présente une portion d'extrémité qui dépasse de l'écrou 48 et qui peut recevoir la douille de fixation 20 lorsqu'on souhaite attacher l'outil de serrage 10 à cet emplacement, la tige d'ancrage 11 étant alors engagée dans la cheminée 45. Par ailleurs, le panneau 31 est collé à la paroi 1 par l'intermédiaire de boudins de mastic polymérisable 46 agencés selon la technique connue, par exemple le long de lignes parallèles droites ou ondulées.

Les outils de serrage 40 à 44 de la figure 2 sont tous attachés à la paroi 1 de la même façon, mais ils différent dans leur utilisation et leur configuration correspondante.

L'outil de serrage 40 prend appui, d'une part sur la surface supérieure du panneau 33 et d'autre part sur la surface de la paroi 1. Pour cela, la tige intermédiaire 21 est dans son réglage de longueur maximale, la vis 23 étant au niveau du premier trou 22 comme sur la figure 1. La tige d'ancrage 11 est aussi dans son réglage de longueur maximale. Elle est attachée à un goujon 2 situé au niveau d'un coin du panneau 33.

L'outil de serrage 44 prend appui, d'une part sur la surface supérieure du panneau 33 et d'autre part sur la surface supérieure du panneau 32. Pour cela, la tige intermédiaire 21 est dans son réglage de longueur minimale, la vis 23 étant au niveau du quatrième trou 22 visible sur la figure 1. La tige d'ancrage 11 est toujours dans son réglage de longueur maximale. Elle est attachée à un goujon 2 situé au niveau d'un coin opposé du panneau 33.

L'outil de serrage 43 prend appui, d'une part sur la surface supérieure de la barrière d'isolation primaire 37 du panneau 31 et d'autre part sur la surface supérieure de la barrière d'étanchéité secondaire 36 du panneau 30. Pour cela, la tige intermédiaire 21 est dans un réglage de longueur intermédiaire, la vis 23 étant au niveau du troisième trou 22 visible sur la figure 1. La tige d'ancrage 11 est toujours dans son réglage de longueur maximale. Elle est attachée à un goujon 2 situé à mi-longueur au bord du panneau 31.

L'outil de serrage 42 prend appui sur la surface supérieure de la barrière d'étanchéité secondaire 36 du panneau 31 et du panneau 30. Pour cela, la tige d'ancrage 11 est dans un réglage de longueur plus courte, pour abaisser le bras 12 d'une hauteur sensiblement égale à l'épaisseur de la barrière d'isolation primaire 37 par rapport au réglage précédent. Elle est attachée à un goujon 2 situé au niveau d'un coin du panneau 30. La tige intermédiaire 21 est dans un réglage de longueur minimale, la vis 23 étant au niveau du quatrième trou 22 visible sur la figure 1.

L'outil de serrage 41 prend appui, d'une part sur la surface supérieure de la barrière d'étanchéité secondaire 36 du panneau 31 et d'autre part sur la surface de la paroi 1. Pour cela, la tige d'ancrage 11 reste dans son réglage précédent. Elle est attachée à un goujon 2 situé au niveau d'un coin du panneau 31. La tige intermédiaire 21 est dans un réglage de longueur intermédiaire, la vis 23 étant au niveau du deuxième trou 22 visible sur la figure 1.

La figure 2 est seulement destinée à illustrer de manière concise différents usages possibles de l'outil de serrage réglable 10 pour réaliser des parois isolantes à partir de différents types de panneaux isolants. Pour fabriquer une paroi isolante à partir de panneaux isolants de ce type, par exemple pour une cuve de stockage de GNL à -163°C, il est en pratique nécessaire de juxtaposer un grand nombre de panneaux tels que le panneau 30 ou le panneau 32. La figure 2 donne donc seulement un aperçu très partiel d'une telle paroi de cuve, dont la structure générale est connue par ailleurs.

Les exemples de serrages représentés sur la figure 2 pourraient être réalisés avec des outils plus simples, par exemple sans possibilité de réglage de la tige intermédiaire 21 et/ou de la tige d'ancrage 11. Dans ce cas, cinq types d'outils différents seraient nécessaires pour réaliser les serrages selon les cinq configurations représentées.

Un avantage résultant de l'utilisation des outils de serrage précités, réglables ou non, tient à la possibilité de serrer un panneau isolant à partir de l'organe d'ancrage situé sur l'emplacement d'un panneau voisin. Cette possibilité permet de réaliser le collage d'un panneau sous un serrage de bonne qualité et de bonne uniformité en employant un nombre limité d'organes d'ancrages par panneau isolant. En effet, une fois que le collage est pris, la fixation du panneau par des écrous 48 ou analogues au niveau des organes d'ancrage n'est pas réellement nécessaire, sauf pour parer à une défaillance du collage, par exemple en cas d'échauffement atypique de la paroi résultant d'un incendie ou autre. Pour éviter un décrochage complet des panneaux isolants dans un tel cas, un petit nombre d'organes d'ancrage peut être suffisant pour chaque panneau, voire un seul organe d'ancrage par panneau. Il en résulte la possibilité de réaliser une paroi isolante, par exemple dans une cuve de stockage de gaz liquéfié, sur une paroi porteuse présentant un relativement petit nombre d'organes d'ancrage. Il en résulte une simplification et une réduction du coût de la réalisation de la paroi porteuse.

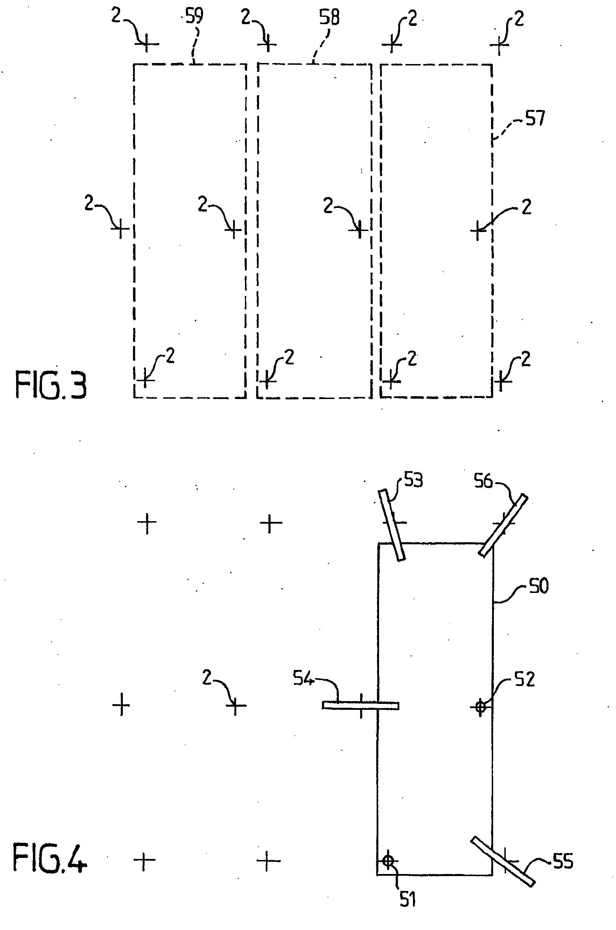

Ce fait va être illustré en référence aux figures 3 à 6 qui représentent un procédé de montage de panneaux isolants sur une paroi porteuse 1 présentant deux goujons filetés 2 par panneau.

Les figures 3 à 6 montrent une paroi porteuse en vue de dessus munie de goujons 2 symbolisés par des croix. Cette paroi est destinée à recevoir des panneaux isolants rectangulaires identiques qui doivent être collés sur la paroi porteuse selon un motif répété régulier. Les emplacements 57, 58, et 59 de trois de ces panneaux sont représentés en trait interrompu sur la figure 3. Les goujons 2 sont disposés sur la paroi porteuse selon un motif répété régulier correspondant aux dimensions des panneaux à fixer, à raison de deux goujons par emplacement d'un panneau isolant.

Le montage du premier panneau 50 est représenté sur la figure 4. La face inférieure du panneau 50, non visible sur les figures 3 à 6, est préalablement enduite d'un adhésif approprié, par exemple des cordons de mastic polymérisable, notamment résine polyuréthane ou d'une autre résine plus souple. Le panneau 50 comprend deux perçages 51 et 52, l'un au coin inférieur gauche et l'autre à mi-longueur du bord droit, qui reçoivent chacun un des goujons 2 de l'emplacement 57. Une fois les goujons 2 engagés dans les perçages 51 et 52, des écrous ou moyens de retenue analogue sont mis en place sur les goujons 2 pour retenir le panneau 50 sur la paroi, par exemple à la manière de l'écrou 48 de la figure 2.

Du fait du petit nombre de goujons 2 coopérant directement avec le panneau 50 et de leur répartition peu dense, ces goujons 2 ne sont pas suffisants pour réaliser un serrage relativement uniforme de toute la surface inférieure du panneau 50 sur la paroi. Pour cela, des outils de serrage 53 à 56 sont utilisés en compléments des écrous précités. Les outils de serrage sont par exemple similaires à l'outil 10 décrit à la figure 1.

A ce stade, aucun autre panneau n'étant encore monté sur la paroi, les outils de serrage 53 à 56 sont à chaque fois mis en appui sur la paroi porteuse et sur la surface supérieure du panneau 50, de manière analogue à l'outil 41 ou 40 de la figure 2. Les outils 53 à 56 assurent un serrage du panneau 50 contre la paroi pendant le temps nécessaire à un écrasement correct et suffisamment uniforme de la résine polymérisable, notamment dans les zones du panneau 50 dépourvues de goujons 2. Pour cela, les outils 53 à 56 sont à chaque fois attachés à des goujons 2 situés sur les emplacements des panneaux voisins du panneau 50.

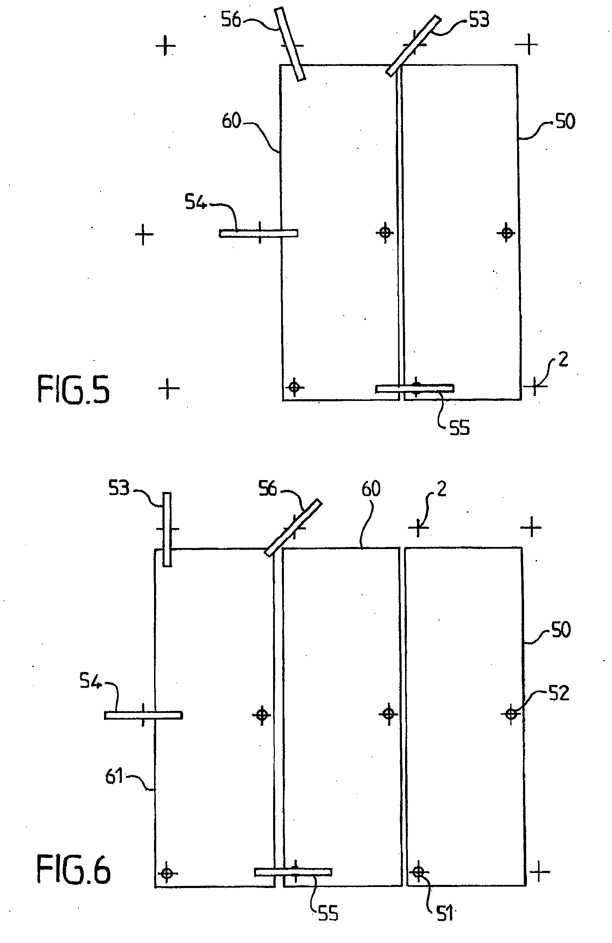

Le montage d'un deuxième panneau 60 voisin du premier panneau 50 est représenté sur la figure 5. L'outil 54 est d'abord détaché de la paroi pour libérer l'empalment 58 où le panneau 60 doit être disposé. Puis la fixation du panneau 60 est réalisée de la même manière que la fixation du panneau 50, moyennant quelques différences dan la mise en place des outils de serrage 53 à 56. Comme visible sur la figure 5, l'outil 54 est simplement décalé d'une position par rapport à la figure 4 et utilisé de la même manière. Il peut donc rester dans la même position de réglage, le cas échéant. L'outil 53 peut rester attaché au même goujon 2, le bras transverse étant simplement tourné pour prendre maintenant appui sur la surface supérieure du panneau 60. Il peut donc rester dans la même position de réglage, le cas échéant. L'outil 56 est décalé de deux positions pour prendre une configuration par rapport au panneau 60 qui est identique à celle de l'outil 53 par rapport au panneau 50 sur la figure 4. Il peut donc rester dans la même position de réglage, le cas échéant. L'outil 55 est décalé d'une position par rapport à la figure 4, mais il prend maintenant appui sur la surface supérieure des panneaux 50 et 60, à la manière de l'outil 42, 43 ou 44 de la figure 2. Sa position de réglage doit donc être modifiée, le cas échéant, ou un autre outil doit être utilisé s'il s'agit d'outils non réglables.

Comme visible sur la figure 6, la fixation du troisième panneau 61 se fait de la même manière en décalant à nouveau les outils de serrage.

Lorsque la paroi isolante est ainsi terminée, tous les panneaux étant collés de manière satisfaisante, tous les outils de serrage peuvent être détachés de la paroi porteuse pour permettre, le cas échéant, la réalisation d'une phase de construction ultérieure, par exemple la mise en place d'une barrière d'étanchéité recouvrant la paroi isolante pour former une cuve étanche, selon la technique connue.

De manière générale, on peut retirer les outils de serrage d'un panneau dès que l'on a correctement écrasé le mastic, c'est-à-dire lorsque le panneau est en contact avec des cales de référence disposées sur la paroi et bien aligné avec les panneaux voisins.

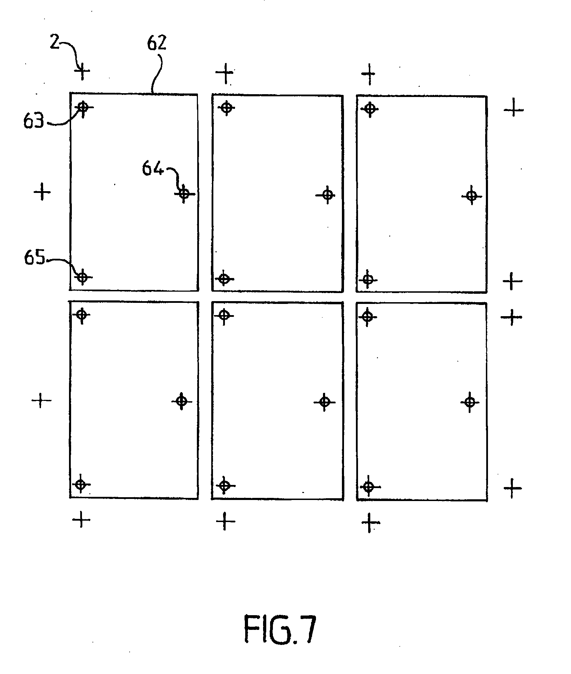

La figure 7 illustre une autre structure de paroi isolante qui peut être réalisée de manière similaire. Dans ce cas, les panneaux isolants 62 sont munis de trois perçages 63, 64 et 65 pour recevoir respectivement trois goujons 2 de la paroi porteuse. D'autres modes de réalisations peuvent encore être conçus en variant notamment le nombre de goujons par panneau, la forme des panneaux, le motif de disposition des panneaux et le motif de disposition des organes d'ancrage de la paroi.

La technique décrite ci-dessus pour réaliser une paroi isolante peut être utilisée dans différents types de réservoirs, par exemple pour constituer la ou les barrières d'isolation thermique d'un réservoir de GNL dans une installation terrestre ou dans un ouvrage flottant comme un navire méthanier ou autre.

Par exemple, dans une cuve de méthanier réalisée selon la technologie Mark III® de la déposante ou dans une cuve de stockage terrestre pour GNL réalisée selon la technologie GST® de la déposante, les panneaux isolants peuvent avoir typiquement les dimensions de 1 m par 3m.

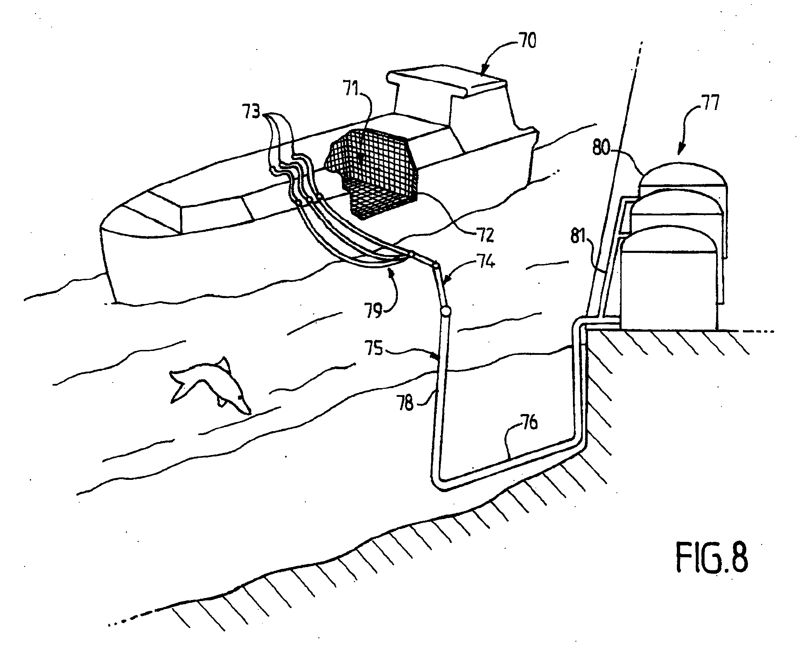

En référence à la figure 8, une vue écorchée d'un navire méthanier 70 montre une cuve étanche et isolée 71 de forme générale prismatique montée dans la double coque 72 du navire. La paroi de la cuve 71 comporte une barrière étanche primaire destinée à être en contact avec le GNL contenu dans la cuve, une barrière étanche secondaire agencée entre la barrière étanche primaire et la double coque 72 du navire, et deux barrières isolante agencées respectivement entre la barrière étanche primaire et la barrière étanche secondaire et entre la barrière étanche secondaire et la double coque 72.

De manière connue en soi, des canalisations de chargement/déchargement 73 disposées sur le pont supérieur du navire peuvent être raccordées, au moyen de connecteurs appropriées, à un terminal maritime ou portuaire pour transférer une cargaison de GNL depuis ou vers la cuve 71.

La figure 8 représente un exemple de terminal maritime comportant un poste de chargement et de déchargement 75, une conduite sous-marine 76 et une installation à terre 77. Le poste de chargement et de déchargement 75 est une installation fixe off-shore comportant un bras mobile 74 et une tour 78 qui supporte le bras mobile 74. Le bras mobile 74 porte un faisceau de tuyaux flexibles isolés 79 pouvant se connecter aux canalisations de chargement/déchargement 73. Le bras mobile 74 orientable s'adapte à tous les gabarits de méthaniers. Une conduite de liaison non représentée s'étend à l'intérieur de la tour 78. Le poste de chargement et de déchargement 75 permet le chargement et le déchargement du méthanier 70 depuis ou vers l'installation à terre 77. Celle-ci comporte des cuves de stockage de gaz liquéfié 80 et des conduites de liaison 81 reliées par la conduite sous-marine 76 au poste de chargement ou de déchargement 75. La conduite sous-marine 76 permet le transfert du gaz liquéfié entre le poste de chargement ou de déchargement 75 et l'installation à terre 77 sur une grande distance, par exemple 5 km, ce qui permet de garder le navire méthanier 70 à grande distance de la côte pendant les opérations de chargement et de déchargement.

Pour engendrer la pression nécessaire au transfert du gaz liquéfié, on met en oeuvre des pompes embarquées dans le navire 70 et/ou des pompes équipant l'installation à terre 77 et/ou des pompes équipant le poste de chargement et de déchargement 75.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes.

Dans les revendications, tout signe de référence entre parenthèses ne saurait être interprété comme une limitation de la revendication.

## Revendications

1. Procédé pour fixer un panneau isolant (50, 60) sur une paroi porteuse au sein d'un motif répété de panneaux isolants (50, 60, 61), la paroi porteuse étant munie d'organes d'ancrage (2) disposés selon ledit motif répété, un panneau isolant comportant à chaque fois un adhésif disposé sur une surface inférieure du panneau isolant et un perçage (51, 52) traversant le panneau isolant, le procédé comportant :
disposer un premier panneau isolant (50, 60) sur la paroi porteuse de manière à appliquer l'adhésif contre la paroi porteuse, le perçage du premier panneau isolant étant positionné au droit d'un premier organe d'ancrage, et
serrer le premier panneau isolant contre la paroi porteuse à l'aide du premier organe d'ancrage (2) au niveau du perçage (51, 52),
**caractérisé en ce que** le procédé comporte :
attacher un outil de serrage (54) à un deuxième organe d'ancrage correspondant à l'emplacement (58, 59) d'un deuxième panneau isolant voisin du premier panneau isolant, l'outil de serrage comportant une tige d'ancrage (11) apte à être attachée aux organes d'ancrage de la paroi porteuse de manière à faire saillie sensiblement perpendiculairement à la paroi porteuse et un bras (12) lié à la tige d'ancrage transversalement à celle-ci pour s'étendre à distance de la paroi porteuse dans la position attachée de l'outil de serrage, et
serrer le premier panneau isolant (50, 60) contre la paroi porteuse avec le bras de l'outil de serrage (54) au niveau d'une zone du premier panneau isolant distante du perçage (51, 52) du premier panneau isolant.

2. Procédé selon la revendication 1, dans lequel le deuxième panneau isolant (60, 61) n'est pas encore disposé sur la paroi porteuse lors de la fixation du premier panneau isolant (50), le bras de l'outil de serrage (54) étant mis en appui d'une part sur le premier panneau isolant (50) et d'autre part sur la paroi porteuse au niveau de l'emplacement (58) du deuxième panneau isolant.

3. Procédé selon la revendication 2, comportant en outre :
retirer l'outil de serrage (54) du deuxième organe d'ancrage après que l'adhésif du premier panneau isolant a été écrasé contre la paroi porteuse, pour permettre la mise en place du deuxième panneau isolant (60) sur la paroi porteuse.

4. Procédé selon la revendication 2 ou 3, dans lequel un troisième panneau isolant (50) voisin du premier panneau isolant (60) est déjà disposé sur la paroi porteuse lors de la fixation du premier panneau isolant (60), le procédé comportant en outre :
attacher un deuxième outil de serrage (55) à un troisième organe d'ancrage correspondant à l'emplacement du troisième panneau isolant (50),
mettre en appui le bras du deuxième outil de serrage d'une part sur le premier panneau isolant (60) et d'autre part sur le troisième panneau isolant (50), et
serrer le premier panneau isolant (60) contre la paroi porteuse avec le bras du deuxième outil de serrage (55) au niveau d'une deuxième zone du premier panneau isolant (60) distante du perçage du premier panneau isolant.

5. Procédé selon la revendication 4, dans lequel une surface du premier panneau isolant (32) et une surface du troisième panneau isolant (33) sur lesquelles le bras du deuxième outil de serrage (44) prend appui sont à un même niveau par rapport à la paroi porteuse (1).

6. Procédé selon la revendication 4, dans lequel une surface du premier panneau isolant (31) et une surface du troisième panneau isolant (30) sur lesquelles le bras du deuxième outil de serrage (43) prend appui sont à des niveaux différents par rapport à la paroi porteuse (1).

7. Procédé selon l'une des revendications 1 à 6, dans lequel les organes d'ancrage comportent des goujons (2) faisant saillie sur la paroi porteuse, le procédé comportant en outre :
visser un écrou (48) sur ledit goujon pour réaliser le serrage du premier panneau isolant (31) contre la paroi porteuse au niveau du perçage (45,47).

8. Procédé selon l'une des revendications 1 à 7, dans lequel l'outil de serrage (10) qui est mis en oeuvre comporte :
une tige d'ancrage (11) apte à être attachée aux organes d'ancrage (2) de la paroi porteuse (1) de manière à faire saillie sensiblement perpendiculairement à la paroi porteuse,
un bras (12) lié à la tige d'ancrage transversalement à celle-ci pour s'étendre à distance de la paroi porteuse dans la position attachée de l'outil de serrage, le bras comportant une première et une deuxième parties (13, 15) situées de part et d'autre de la tige d'ancrage,
un premier organe d'appui (14) lié de manière mobile à la première partie du bras et
réglable en position par rapport au bras selon une direction sensiblement parallèle à la tige d'ancrage pour pouvoir être mis en appui sur un panneau isolant, et
un deuxième organe d'appui (16) lié de manière mobile à la deuxième partie du bras et réglable en position par rapport au bras selon une direction sensiblement parallèle à la tige d'ancrage,
dans lequel le deuxième organe d'appui (16) présente une amplitude de réglage en position par rapport au bras supérieure à l'épaisseur des panneaux isolants (30-33) pour pouvoir mettre en appui le deuxième organe d'appui sélectivement sur la paroi porteuse (1) ou sur un autre panneau isolant (33) lorsque le premier organe d'appui est en appui sur le premier panneau isolant (33, 32).

9. Procédé selon la revendication 8, dans lequel le premier organe d'appui (14) comporte un premier patin (18) lié à l'extrémité d'une première vis de réglage (17), la première vis de réglage étant engagé dans un trou fileté disposé dans la première partie du bras (13).

10. Procédé selon la revendication 8 ou 9, dans lequel le deuxième organe d'appui (16) comporte un deuxième patin (26) lié à l'extrémité d'une deuxième vis de réglage (25), la deuxième vis de réglage étant engagé dans un trou fileté disposé dans une tige intermédiaire (21), la tige intermédiaire étant liée à la deuxième partie du bras (15) de manière à s'étendre parallèlement à la tige d'ancrage et étant réglable en position par rapport à la deuxième partie du bras.

11. Procédé selon la revendication 10, dans lequel la tige intermédiaire (21) présente plusieurs positions de réglage prédéterminées (22) par rapport à la deuxième partie du bras.

12. Procédé selon l'une des revendications 8 à 11, dans lequel le bras (12) est réglable en position le long de la tige d'ancrage (11).

13. Procédé selon l'une des revendications 8 à 12, dans lequel le bras (12) et la tige d'ancrage (11) sont articulés l'un à l'autre par une liaison rotule.

## Patentansprüche

1. Verfahren zur Befestigung einer Dämmstoffplatte (50, 60) an einer tragenden Wand in einem Wiederholungsmuster von Dämmstoffplatten (50, 60, 61), wobei die tragende Wand mit Verankerungsmitteln (2) ausgestattet ist, welche nach dem Wiederholungsmuster angeordnet sind, wobei eine Dämmstoffplatte jedes Mal ein Klebemittel enthält, welches an einer unteren Oberfläche der Dämmstoffplatte angeordnet ist, sowie eine Bohrung (51, 52), welche die Dämmstoffplatte durchdringt, das Verfahren umfassend:
Anordnen einer ersten Dämmstoffplatte (50, 60) an der tragenden Wand, so dass das Klebemittel an die tragende Wand gedrückt werden kann, wobei sich die Bohrung der ersten Dämmstoffplatte gegenüber einem ersten Verankerungsmittel befindet, und
Andrücken der ersten Dämmstoffplatte an die tragende Wand mittels des ersten Verankerungsmittels (2) an der Bohrung (51, 52),
**dadurch gekennzeichnet, dass** das Verfahren umfasst:
Befestigen eines Spannwerkzeuges (54) an einem zweiten Verankerungsmittel, welches der Stelle (58, 59) einer zweiten Dämmstoffplatte angrenzend an die erste Dämmstoffplatte entspricht, wobei das Spannwerkzeug eine Ankerstange (11), welche dazu geeignet ist, an den Verankerungsmitteln der tragenden Wand derart befestigt zu werden, dass diese im Wesentlichen senkrecht zu der tragenden Wand hervorsteht, und einen Arm (12) umfasst, welcher quer zu und mit der Ankerstange verbunden ist, um sich beabstandet von der tragenden Wand in der Befestigungsposition des Spannwerkzeuges zu erstrecken, und
Andrücken der ersten Dämmstoffplatte (50, 60) an die tragende Wand mit dem Arm des Spannwerkzeuges (54) an einem Bereich der ersten Dämmstoffplatte, welcher von der Bohrung (51, 52) der ersten Dämmstoffplatte entfernt ist.

2. Verfahren gemäß Anspruch 1, wobei die zweite Dämmstoffplatte (60, 61) bei der Befestigung der ersten Dämmstoffplatte (50) noch nicht an der tragenden Wand angeordnet ist, wobei der Arm des Spannwerkzeuges (54) einerseits auf die erste Dämmstoffplatte (50) und andererseits auf die tragende Wand an der Stelle (58) der zweiten Dämmstoffplatte gestützt wird.

3. Verfahren gemäß Anspruch 2, weiterhin umfassend:
Entfernen des Spannwerkzeuges (54) von dem zweiten Verankerungsmittel, nachdem das Klebemittel der ersten Dämmstoffplatte an die tragende Wand gedrückt worden ist, um das Montieren der zweiten Dämmstoffplatte (60) an die tragende Wand zu ermöglichen.

4. Verfahren gemäß Anspruch 2 oder 3, wobei eine dritte Dämmstoffplatte (50) angrenzend an die erste Dämmstoffplatte (60) bei der Befestigung der ersten Dämmstoffplatte (60) bereits an der tragenden Wand angeordnet ist, das Verfahren umfassend weiterhin:
Befestigen eines zweiten Spannwerkzeuges (55) an einem dritten Verankerungsmittel, welches der Stelle der dritten Dämmstoffplatte (50) entspricht,
Stützen des Arms des zweiten Spannwerkzeuges einerseits auf die erste Dämmstoffplatte (60) und andererseits auf die dritte Dämmstoffplatte (50), und
Andrücken der ersten Dämmstoffplatte (60) an die tragende Wand mit dem Arm des zweiten Spannwerkzeuges (55) an einem zweiten Bereich der ersten Dämmstoffplatte (60), welcher von der Bohrung der ersten Dämmstoffplatte entfernt ist.

5. Verfahren gemäß Anspruch 4, wobei eine Oberfläche der ersten Dämmstoffplatte (32) und eine Oberfläche der dritten Dämmstoffplatte (33), auf die sich der Arm des zweiten Spannwerkzeuges (44) stützt, auf einer gleichen Ebene wie die tragende Wand (1) sind.

6. Verfahren gemäß Anspruch 4, wobei eine Oberfläche der ersten Dämmstoffplatte (31) und eine Oberfläche der dritten Dämmstoffplatte (30), auf die sich der Arm des zweiten Spannwerkzeuges (43) stützt, gegenüber der tragenden Wand (1) auf unterschiedlichen Ebenen sind.

7. Verfahren gemäß einem der Ansprüche 1 bis 6, wobei die Verankerungsmittel Bolzen (2) umfassen, welche auf der tragenden Wand hervorstehen, das Verfahren umfassend weiterhin:
Schrauben einer Mutter (48) auf den Bolzen, um das Andrücken der ersten Dämmstoffplatte (31) an die tragende Wand an der Bohrung (45, 47) durchzuführen.

8. Verfahren gemäß einem der Ansprüche 1 bis 7, wobei das eingesetzte Spannwerkzeug (10) umfasst:
eine Ankerstange (11), welche dazu geeignet ist, an den Verankerungsmitteln (2) der tragenden Wand (1) derart befestigt zu werden, dass diese im Wesentlichen senkrecht zu der tragenden Wand hervorsteht,
einen Arm (12), welcher quer zu und mit der Ankerstange verbunden ist, um sich beabstandet von der tragenden Wand in dem befestigten Zustand des Spannwerkzeuges zu erstrecken, wobei der Arm einen ersten und einen zweiten Teil (13, 15) umfasst, welche sich beiderseits der Ankerstange befinden,
ein erstes Stützglied (14), welches mit dem ersten Teil des Arms beweglich verbunden und gegenüber dem Arm in einer Richtung verstellbar ist, welche im Wesentlichen parallel zu der Ankerstange verläuft, um auf eine Dämmstoffplatte gestützt zu werden, und
ein zweites Stützglied (16), welches mit dem zweiten Teil des Arms beweglich verbunden und gegenüber dem Arm in einer Richtung verstellbar ist, welche im Wesentlichen parallel zu der Ankerstange verläuft,
wobei das zweite Stützglied (16) gegenüber dem Arm eine stufenlose Richtungsverstellung aufweist,
welche größer als die Höhe der Dämmstoffplatten (30-33) ist, um das zweite Stützglied selektiv auf die tragende Wand (1) oder auf eine andere Dämmstoffplatte (33) zu stützen, wenn das erste Stützglied auf der ersten Dämmstoffplatte (33, 32) gestützt ist.

9. Verfahren gemäß Anspruch 8, wobei das erste Stützglied (14) einen ersten Schuh (18) umfasst, welcher am Ende einer ersten Stellschraube (17) angeordnet ist, wobei die erste Stellschraube in einem Gewindeloch eingeführt ist, welches in dem ersten Teil des Arms (13) angeordnet ist.

10. Verfahren gemäß Anspruch 8 oder 9, wobei das zweite Stützglied (16) einen zweiten Schuh (26) umfasst, welcher am Ende einer zweiten Stellschraube (25) angeordnet ist, wobei die zweite Stellschraube in einem Gewindeloch eingeführt ist, welches in einer Zwischenstange (21) angeordnet ist, wobei die Zwischenstange mit dem zweiten Teil des Arms (15) verbunden ist, so dass sie sich parallel zu der Ankerstange erstreckt und gegenüber dem zweiten Teil des Arms richtungsverstellbar ist.

11. Verfahren gemäß Anspruch 10, wobei die Zwischenstange (21) gegenüber dem zweiten Teil des Arms mehrere vorbestimmte Verstellungspositionen (22) aufweist.

12. Verfahren gemäß Anspruch 8 bis 11, wobei der Arm (12) entlang der Ankerstange (11) richtungsverstellbar ist.

13. Verfahren gemäß einem der Ansprüche 8 bis 12, wobei der Arm (12) und die Ankerstange (11) durch ein Kugelgelenk miteinander verbunden sind.

## Claims

1. Method for fixing an insulating panel (50, 60) to a supporting wall in a repeated pattern of insulating panels (50, 60, 61), the supporting wall being provided with anchor members (2) disposed in said repeated pattern, an insulating panel including each time an adhesive disposed on a lower surface of the insulating panel and a hole (51, 52) passing through the insulating panel, the method including:
disposing a first insulating panel (50, 60) on the supporting wall in such a manner as to press the adhesive against the supporting wall, the hole of the first insulating panel being positioned in line with a first anchor member,
clamping the first insulating panel against the supporting wall with the aid of the first anchor member (2) at the level of the hole (51, 52),
**characterized in that** the method comprises:
attaching a clamping tool (54) to a second anchor member corresponding to the location (58, 59) of a second insulating panel adjacent the first insulating panel, the clamping tool including an anchor rod (11) adapted to be attached to the anchor members of the supporting wall in such a manner as to project substantially perpendicularly to the supporting wall and an arm (12) connected to the anchor rod transversely thereto to extend at a distance from the supporting wall in the attached position of the clamping tool, and
clamping the first insulating panel (50, 60) against the supporting wall with the arm of the clamping tool (54) in an area of the first insulating panel distant from the hole (51, 52) of the first insulating panel.

2. Method according to Claim 1, wherein the second insulating panel (60, 61) has not yet been placed on the supporting wall when fixing the first insulating panel (50), the arm of the clamping tool (54) being brought to bear on the one hand on the first insulating panel (50) and on the other hand on the supporting wall at the level of the location (58) of the second insulating panel.

3. Method according to Claim 2, further including:
removing the clamping tool (54) from the second anchor member after the adhesive on the first insulating panel has been crushed against the supporting wall, to enable placing of the second insulating panel (60) on the supporting wall.

4. Method according to Claim 2 or 3, wherein a third insulating panel (50) adjacent the first insulating panel (60) has already been disposed on the supporting wall during the fixing of the first insulating panel (60), the method further including:
attaching a second clamping tool (55) to a third anchor member corresponding to the location of the third insulating panel (50),
bringing the arm of the second clamping tool to bear on the one hand on the first insulating panel (60) and on the other hand on the third insulating panel (50), and
clamping the first insulating panel (60) against the supporting wall with the arm of the second clamping tool (55) at the level of a second area of the first insulating panel (60) at a distance from the hole of the first insulating panel.

5. Method according to Claim 4, wherein a surface of the first insulating panel (32) and a surface of the third insulating panel (33) on which the arm of the second clamping tool (44) bears are at the same level relative to the supporting wall (1).

6. Method according to Claim 4, wherein a surface of the first insulating panel (31) and a surface of the third insulating panel (30) on which the arms of the second clamping tool (43) bear are at different levels relative to the supporting wall (1).

7. Method according to any one of Claims 1 to 6, wherein the anchor members include studs (2) projecting from the supporting wall, the method further including:
screwing a nut (48) onto said stud to clamp the first insulating panel (31) against the supporting wall at the level of the hole (45, 47).

8. Method according to any one of Claims 1 to 7, wherein the clamping tool (10) that is used includes:
an anchor rod (11) adapted to be attached to the anchor members (2) of the supporting wall (1) in such a manner as to project substantially perpendicularly to
the supporting wall,
an arm (12) connected to the anchor rod transversely thereto to extend at a distance from the supporting wall in the attached position of the clamping tool, the arm including first and second parts (13, 15) situated on respective opposite sides of the anchor rod,
a first bearing member (14) connected in a mobile manner to the first part of the arm and adjustable in position relative to the arm in a direction substantially parallel to the anchor rod so as to be able to be brought to bear on an insulating panel, and
a second bearing member (16) connected in a mobile manner to the second part of the arm and adjustable in position relative to the arm in a direction substantially parallel to the anchor rod,
wherein the second bearing member (16) has an amplitude of position adjustment relative to the arm greater than the thickness of the insulating panels (30-33) so as to be able to bring the second bearing member to bear selectively on the supporting wall (1) or on another insulating panel (33) when the first bearing member is bearing on the first insulating panel (33, 32).

9. Method according to Claim 8, wherein the first bearing member (14) includes a first pad (18) connected to the end of a first adjustment screw (17), the first adjustment screw being engaged in a threaded hole in the first part of the arm (13).

10. Method according to Claim 8 or 9, wherein the second bearing member (16) includes a second pad (26) connected to the end of a second adjustment screw (25), the second adjustment screw being engaged in a threaded hole in an intermediate rod (21), the intermediate rod being connected to the second part of the arm (15) in such a manner as to extend parallel to the anchor rod and being adjustable in position relative to the second part of the arm.

11. Method according to Claim 10, wherein the intermediate rod (21) has a plurality of predetermined adjustment positions (22) relative to the second part of the arm.

12. Method according to any one of Claims 8 to 11, wherein the arm (12) is adjustable in position along the anchor rod (11).

13. Method according to any one of Claims 8 to 12, wherein the arm (12) and the anchor rod (11) are articulated to each other by a ball-joint connection.
